(19) **Europäisches Patentamt European Patent Office Office européen des brevets**

(11) **EP 1 426 214 B1**

(12) **FASCICULE DE BREVET EUROPEEN**

(45) Date de publication et mention
de la délivrance du brevet:
**29.08.2007 Bulletin 2007/35**

(51) Int Cl.:
**B60H 1/00** *(2006.01)*

(21) Numéro de dépôt: **03025264.7**

(22) Date de dépôt: **06.11.2003**

(54) **Boucle de climatisation d'un appareil de ventilation, de chauffage, et/ou de climatisation pour habitacle de véhicule automobile comprenant au moins un organe muni d'une instrumentation intégrée**

Klimaanlagekreislauf einer Heizungs-, Belüftungs-, und/oder Kühlungsvorrichtung für den Innenraum eines Kraftfahrzeuges, mit zumindest einer Komponente mit integrierter Instrumentierung

Air conditioning loop in a ventilating, heating, and/or cooling apparatus for an automotive vehicle passenger compartment, comprising at least one component having an integrated instrumentation

(84) Etats contractants désignés:
**AT BE BG CH CY CZ DE DK EE ES FI FR GB GR HU IE IT LI LU MC NL PT RO SE SI SK TR**

(30) Priorité: **05.12.2002 FR 0215355**

(43) Date de publication de la demande:
**09.06.2004 Bulletin 2004/24**

(73) Titulaire: **VALEO SYSTEMES THERMIQUES
78320 Le Mesnil Saint-Denis (FR)**

(72) Inventeurs:
• **Ben Yahia, Mohamed
75005 Paris (FR)**
• **Benois, Jean-Luc
78280 Guyancourt (FR)**

(56) Documents cités:
**DE-A- 4 433 210  DE-C- 10 051 755
DE-U- 29 616 608  JP-A- 63 170 121
US-A- 5 788 148**

## Description

L'invention se rapporte à une boucle de climatisation d'un appareil de ventilation, de chauffage et/ou de climatisation pour habitacle de véhicule automobile comprenant au moins un organe muni d'une instrumentation intégrée.

Dans une boucle typique de climatisation d'un appareil de ventilation, de chauffage et/ou de climatisation pour véhicule automobile, il est en général difficile d'accéder aux informations quantitatives et/ou qualitatives sur le fonctionnement physique dudit appareil et de ses différents organes qui le constituent, notamment en ce qui concerne la pression, la vitesse d'écoulement, ou la température du fluide de refroidissement utilisé. Or ces données peuvent être très utiles pour améliorer le fonctionnement et le rendement de la boucle, afin d'optimiser le confort des passagers du véhicule. Il est connu d'utiliser des capteurs communs de pression et/ou de température montés en sortie ou à l'intérieur d'organes, tels qu'un compresseur, un échangeur thermique, un évaporateur, un condenseur, un organe de détente ou une canalisation de circulation d'un fluide caloporteur. Dans les solutions de l'art antérieur, ces capteurs, sont de type intrusif, c'est-à-dire que leur mise en place nécessite la vidange de la boucle de climatisation, et ce à chaque installation ou remplacement d'un capteur. Le document JP 63170121, qui est considéré comme l'état de l'art le plus proche, divulgue un tel capteur, permettant de mesurer la température d'un fluide réfrigérant. Cela engendre donc des incertitudes importantes dans la précision des mesures. Ils peuvent également être nuisibles à l'étanchéité du circuit de fluide, ce qui est un inconvénient majeur, notamment dans le cas d'un compresseur où les pressions atteintes peuvent dépasser 28 bars pour un fluide réfrigérant de type R134A et 135 bars pour un fluide super-critique de type $CO_2$ (R744). Résoudre un tel problème d'étanchéité rend le coût de l'appareil prohibitif.

Pour résoudre ces problèmes, l'invention propose d'intégrer de manière non intrusive un capteur dans ledit organe.

Plus précisément, l'invention a pour objet une boucle de climatisation d'un appareil de ventilation, de chauffage et/ou de climatisation pour habitacle de véhicule automobile, à l'intérieur de laquelle circule un fluide caloporteur et comprenant une pluralité d'organes parmi au moins un évaporateur, un échangeur refroidisseur de gaz, un compresseur, un échangeur de chaleur, une vanne de détente et au moins une canalisation de circulation d'un fluide caloporteur pour former un circuit d'échange thermique, caractérisé en ce l'un au moins desdits organes comprend au moins une cavité borgne allongée par rapport à l'organe et ouverte vers l'extérieur dudit organe, ladite au moins une cavité formant partie intégrante de l'organe et recevant un moyen de mesure d'une grandeur caractéristique dudit fluide caloporteur, choisie parmi sa pression, sa vitesse d'écoulement et sa température.

Ainsi, la forme de la cavité n'est pas intrusive car l'organe qui la supporte est conçu et pensé pour que cette forme ne nuise pas au fonctionnement de l'organe et donc de la boucle.

De préférence, ladite au moins une cavité est réalisée lors de la fabrication de l'organe de façon à former un ensemble unitaire avec celui-ci.

Afin d'améliorer la précision de la mesure, ladite au moins une cavité pénètre à l'intérieur de l'organe sur une profondeur telle que la surface d'échange thermique entre la cavité et le fluide caloporteur circulant au sein dudit organe est maximale.

Dans le but de maintenir le moyen de mesure à l'intérieur de la cavité tout en réduisant les pertes thermiques, le moyen de mesure est entouré d'une pâte conductrice de la chaleur.

Avantageusement, ladite au moins une cavité présente une forme de doigt de gant sensiblement cylindrique.

Afin d'affiner la précision des résultats, une seconde cavité est aménagée dans l'organe et renferme un second moyen de mesure faisant office de capteur de référence.

De préférence, le moyen de mesure est un thermocouple ou un capteur à coefficient de température négatif.

D'autres caractéristiques, détails et avantages de l'invention ressortiront à la lecture de la description faite en référence aux dessins annexés donnés à titre d'exemple qui représentent respectivement :

- la figure 1, une vue schématique d'une boucle de climatisation d'un appareil de ventilation, de chauffage et/ou de climatisation d'un véhicule automobile,
- la figure 2, une vue détaillée en coupe d'un évaporateur appartenant à ladite boucle de climatisation et équipé d'un capteur de mesure intégré,
- la figure 3, une vue en coupe d'une variante de réalisation de la figure 2, et
- les figures 4 et 5, des diagrammes de Mollier illustrant respectivement les zones ou un fluide réfrigérant tel que du R134 ou du $CO_2$ est diphasique.

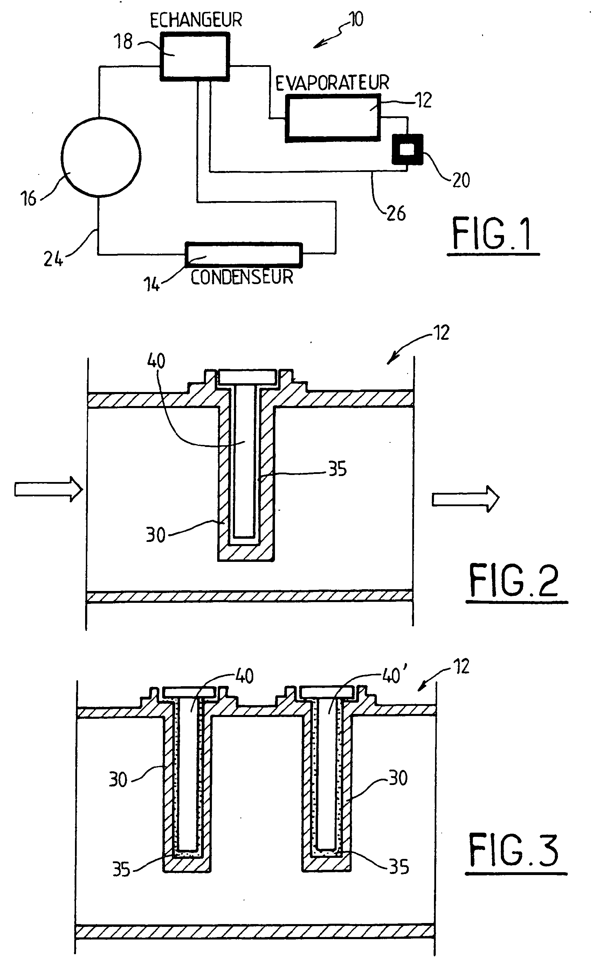

La figure 1 représente de manière schématique une boucle de climatisation 10 d'un appareil de ventilation, de chauffage et/ou de climatisation pour habitacle de véhicule automobile. Cette boucle 10 comprend typiquement un évaporateur 12, un échangeur refroidisseur de gaz 14 tel qu'un condenseur, un compresseur 16, un échangeur de chaleur 18, tel qu'un radiateur, et une vanne de détente 20. Des canalisations 24 et 26 de circulation d'un fluide caloporteur, par exemple un réfrigérant du type R134A, relient les différents organes entre eux, en circuits fermés.

La figure 2 représente, en vue détaillée en coupe, un des organes de l'appareil, par exemple l'évaporateur 12. Cet évaporateur 12 comprend une cavité 30 en forme de « doigt de gant » sensiblement cylindrique ouverte sur l'extérieur de l'évaporateur 12 et borgne vers l'intérieur de celui-ci. Cette cavité 30 plonge à l'intérieur de l'évaporateur 12 pour être au contact du fluide caloporteur, au plus près de la zone où il est souhaitable de réaliser la mesure. Ainsi, la cavité 30 est positionnée au sein de l'évaporateur 12 de telle sorte qu'une surface de contact maximum soit créée entre ladite cavité 30 et le fluide afin que l'échange thermique entre les deux soit le plus important possible pour permettre d'améliorer la précision de la mesure et la constante de temps du système. En pratique, cela signifie que la cavité 30 baigne quasiment intégralement dans le fluide.

Lors de la fabrication de l'organe, en l'occurrence ici de l'évaporateur 12, la cavité borgne 30 est réalisée en même temps que ledit organe, par exemple par moulage, pour former un ensemble unitaire. Ainsi, une étanchéité parfaite au fluide circulant à l'intérieur dudit organe est créée car il ne s'agit pas d'une pièce rapportée ultérieurement, par exemple par vissage.

Une pâte 35 conduisant la chaleur est intercalée entre la paroi interne 32 de la cavité 30 et un capteur de mesure 40 inséré dans ladite cavité 30, de manière non intrusive à l'intérieur de l'évaporateur. Cette pâte 35 maintient le capteur 40 en place dans la cavité 30 et permet de conduire la chaleur dégagée par le fluide circulant dans l'évaporateur jusqu'au capteur 40 en réduisant les pertes thermiques. Le capteur 40, typiquement un thermocouple ou un capteur à coefficient de température négatif, permet de mesurer la température du fluide caloporteur, ce qui permet de déduire par calcul physique (expliqué plus loin) la pression ou le débit dudit fluide dans une zone où il est diphasique. Le capteur 40 est reliée à un dispositif de traitement du signal (non représenté) permettant de prendre en considération la grandeur mesurée pour adapter le fonctionnement de l'appareil ou vérifier son état, par exemple en intervenant sur la mise en/hors fonctionnement du compresseur.

Selon une variante de réalisation représentée sur la figure 3, deux capteurs identiques 40 et 40' sont placés chacun dans une cavité 30 aménagée directement dans l'évaporateur, comme précédemment, les deux cavités 30 étant très proches l'une de l'autre. A l'aide de ce dispositif, il est ainsi possible de réaliser une mesure quantitative d'une grandeur physique relative au fluide. A cet effet, le second capteur 40' fait office de capteur de référence. Pour cela, ce capteur de référence 40' reçoit, d'une source d'énergie, une quantité d'énergie fixée et déterminée par la relation $Q = RI^2$ de sorte qu'il est possible de mesurer sa température (son échauffement) de manière très précise. Dans ce cas, l'écart entre la température T du capteur de référence 40' et la température Tr mesurée à l'aide du capteur de mesure 40 étant proportionnel à la puissance Q fournie au capteur de référence 40', il est possible de déduire le débit du fluide à l'aide de la relation suivante :

$$Q = RI^2 = ks \cdot (T - Tr)$$

Où k est la conductance du matériau de la cavité en $W/m^2.°C$, s est la surface d'échange de la cavité avec le fluide, T est la température de référence, Tr est la température mesurée et le produit ks est une fonction du débit massique M du fluide, de sa pression et de sa température selon la relation suivante :

$$ks = f (M, pression, température)$$

En forme simplifiée, cette loi donne :

$$ks = a.Mb$$

avec a = f (Pression, Température) et b représentant le coefficient d'échange thermique.

Par exemple, si la cavité 30 de mesure est assimilable à un tube de 2 mm de diamètre et de 15 mm de longueur, la surface d'échange $s = \pi \times 2 \times 15 = 9,4. 10^{-5}$ $m^2$. Si l'échange de chaleur entre la cavité 30 et le fluide est égal à environ 800 $W/m^2.°K$, alors ks= 0,0752 W/°C.

Ainsi, si le capteur de référence 40' est chauffé avec une puissance Q égale à 1 W, alors (T-Tr) = 13,3°C. De même, si le capteur de référence est chauffé avec une puissance Q égale à 2 W, alors (T-Tr) = 26,6°C. L'avantage de réaliser une mesure à 2W par rapport à une mesure à 1W est qu'à 26,6°C, l'incertitude relative de la mesure consécutive à la précision du capteur (environ 2°C) est plus faible que pour une mesure à 13,3°C.

Il est alors possible de déduire le débit du fluide à l'aide de la relation suivante :

$$Q = ks.(T - Tr),$$

c'est-à-dire :

$$ks = Q/(T - Tr).$$

En utilisant la loi ks = a.Mb, on obtient ainsi :

$$M = (ks/a)1/b,$$

M étant le débit massique du fluide.

Ceci n'est bien sur possible que lorsque le capteur est placé dans une zone diphasique (zone dans laquelle s'applique la loi de saturation des gaz).

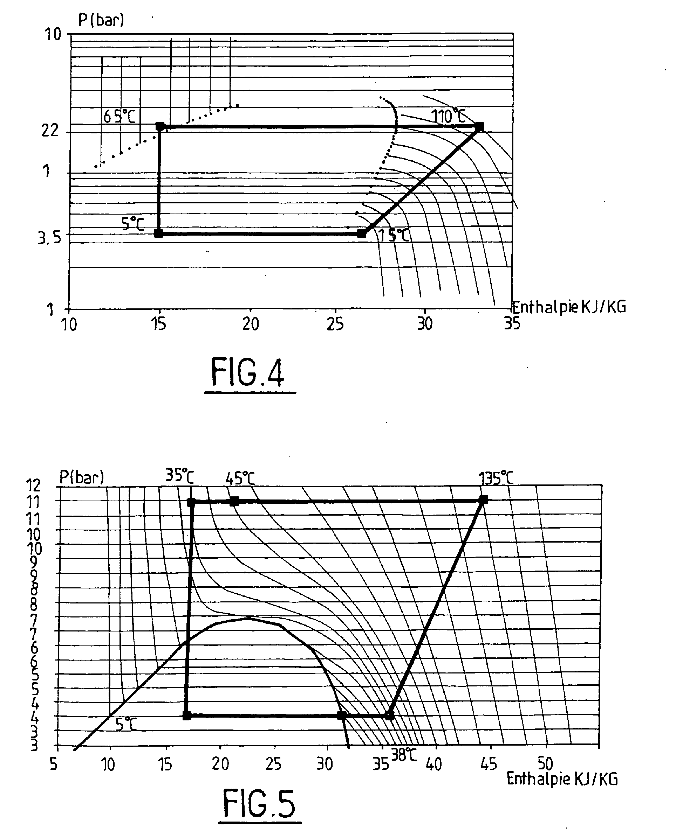

Les figures 4 et 5 sont deux représentations du diagramme de Mollier, une pour le R134A (figure 4) et l'autre pour le $CO_2$ (figure 5). Ces diagrammes illustrent les zones ou le fluide est diphasique, c'est-à-dire là où le débit massique peut être estimer par la loi de saturation.

Ce calcul n'est pas applicable pour une zone tout liquide (ex : sortie du condenseur) ou tout gazeux (ex : sortie de l'évaporateur ou du compresseur). Néanmoins, il peut être intéressant de connaître la température du fluide dans ces zones.

A l'aide de la loi connue de saturation des fluides reliant pression et température lors du changement de phase, il est aussi possible de déterminer la pression du fluide réfrigérant circulant dans l'organe en fonction de sa température mesurée à l'aide du capteur de mesure. Cette information peut être utile lorsque l'organe est par exemple un compresseur, en plaçant le capteur dans la zone basse pression ou la zone haute pression et en considérant que le mélange de fluide est de type diphasique à cet endroit.

Les avantages procurés par l'invention sont les suivants :

- pas de problème d'étanchéité,
- interchangeabilité des capteurs, et
- pas de vidange du circuit de la boucle.

Il doit être bien entendu toutefois que ces exemples sont donnés uniquement à titre d'illustration de l'objet de l'Invention dont ils ne constituent en aucune manière une limitation.

Ainsi, l'invention s'applique à tout type d'organe appartenant à un circuit thermique d'un appareil de ventilation, de chauffage et/ou de ventilation autre que l'évaporateur, notamment l'échangeur refroidisseur de gaz (condenseur dans le cas du R134A), le compresseur, une vanne de détente, etc....

Le capteur peut également être placé en sortie ou en entrée de l'un de ces organes, dans une canalisation de circulation du fluide de refroidissement.

Dans le mode de réalisation illustré, la boucle 10 fonctionne avec un fluide réfrigérant de type R134A, mais un fluide supercritique tel que du C02 peut aussi être utilisé.

**Revendications**

1. Boucle de climatisation d'un appareil de ventilation, de chauffage et/ou de climatisation (10) pour habitacle de véhicule automobile, à l'intérieur de laquelle circule un fluide caloporteur et comprenant une pluralité d'organes parmi au moins un évaporateur (12), un échangeur refroidisseur de gaz (14), un compresseur (16), un échangeur de chaleur (18), une vanne de détente (20) et au moins une canalisation (24 ; 26) de circulation d'un fluide réfrigérant ou super-critique pour former un circuit d'échange thermique, et un moyen de mesure (40) d'une grandeur caractéristique dudit du fluide réfrigérant ou super-critique choisie parmi sa pression, sa vitesse d'écoulement et sa température, **caractérisé en ce que** l'un au moins desdits organes comprend au moins une cavité borgne (30) allongée par rapport audit organe et ouverte vers l'extérieur de celui-ci, ladite cavité plongeant à l'intérieur de l'organe pour être au contact du fluide réfrigérant ou super-critique, ladite cavité (30) formant partie intégrante de l'organe et recevant ledit moyen de mesure (40).

2. Boucle de climatisation selon la revendication 1, dans laquelle ladite au moins une cavité (30) est réalisée lors de la fabrication de l'organe (12 ; 14 ; 16 ; 18 ; 20 ; 24 ; 26) de façon à former un ensemble unitaire avec celui-ci.

3. Boucle de climatisation selon la revendication 1 ou 2, dans laquelle ladite au moins une cavité (30) pénètre à l'intérieur de l'organe (12 ; 14 ; 16 ; 18 ; 20 ; 24 ; 26) sur une profondeur telle que la surface d'échange thermique entre la cavité (30) et le fluide caloporteur circulant au sein dudit organe (12 ; 14 ; 16 ; 18 ; 20 ; 24 ; 26) est maximale.

4. Boucle de climatisation selon l'une quelconque des revendications précédentes, dans laquelle le moyen de mesure (40) est entouré d'une pâte (35) conductrice de la chaleur.

5. Boucle de climatisation selon l'une quelconque des revendications précédentes, dans laquelle ladite au moins une cavité (30) présente une forme de doigt de gant sensiblement cylindrique.

6. Boucle de climatisation selon l'une quelconque des revendications précédentes, dans laquelle une seconde cavité (30) est aménagée dans l'organe et renferme un second moyen de mesure (40') faisant office de capteur de référence.

7. Boucle de climatisation selon la revendication 6, dans laquelle, le second capteur (40') est relié à une source d'énergie délivrant une quantité d'énergie déterminée de telle sorte que, pour ladite quantité d'énergie, l'écart de température entre la température mesurée à l'aide du premier capteur (40) et la température de référence mesurée par le second capteur (40') est représentatif du débit du fluide.

8. Boucle de climatisation selon l'une quelconque des revendications précédentes, dans laquelle le moyen de mesure (40 ; 40') est un thermocouple.

9. Boucle de climatisation selon l'une quelconque des revendications 1 à 7, dans laquelle le moyen de mesure (40 ; 40') est un capteur à coefficient de température négatif.

## Claims

1. Air conditioning loop in a ventilating, heating and/or air conditioning apparatus (10) for a motor vehicle car interior, inside of which a coolant circulates, and including a plurality of units including an evaporator (12), a gas cooling exchanger (14), a compressor (16), a heat exchanger (18), an pressure release valve (20) and at least one tube (24; 26) for circulating a coolant or supercritical fluid so as to form a heat exchange circuit, and means (40) for measuring a quantity characteristic of said coolant or supercritical fluid, chosen from the pressure, the flow rate and the temperature thereof, **characterised in that** at least one of said units includes at least one elongated cavity (30), extended with respect to said unit and open toward the outside thereof, said cavity plunging inside the unit so as to be in contact with the coolant or supercritical fluid, said cavity (30) forming an integral part of the unit and receiving said measuring means (40).

2. Air conditioning loop according to claim 1, in which said at least one cavity (30) is produced during the manufacture of the unit (12; 14; 16; 18; 20; 24; 26) so as to form a unitary assembly with it.

3. Air conditioning loop according to claim 1 or 2, in which said at least one cavity (30) penetrates into the unit (12; 14; 16; 18; 20; 24; 26) to such a depth that the heat exchange surface between the cavity (30) and the coolant circulating in said unit (12; 14; 16; 18; 20; 24; 26) is maximal.

4. Air conditioning loop according to any one of the previous claims, in which the measuring means (40) are surrounded by a paste (35) capable of conducting heat.

5. Air conditioning loop according to any one of the previous claims, in which said at least one cavity (30) has the shape of a substantially cylindrical glove finger.

6. Air conditioning loop according to any one of the previous claims, in which a second cavity (30) is provided in the unit and houses second measuring means (40') serving as a reference detecting element.

7. Air conditioning loop according to claim 6, in which the second detecting element (40') is connected to a power source generating a predetermined amount of power so that, for said amount of power, the temperature difference between the temperature measured by the first detecting element (40) and the reference temperature measured by the second detecting element (40') represents the flow rate of the fluid.

8. Air conditioning loop according to any one of the previous claims, in which the measuring means (40; 40') are a thermocouple.

9. Air conditioning loop according to any one of claims 1 to 7, in which the measuring means (40; 40') are a negative temperature coefficient detecting element.

## Patentansprüche

1. Klimakreislauf eines Belüftungs-, Heiz- und/oder Klimageräts (10) für den Fahrgastraum eines Kraftfahrzeugs, in dessen Innerem ein Wärmeträger fließt und der mehrere Vorrichtungen umfasst, darunter mindestens ein Verdampfer (12), ein Gasaustauscher/kühler (14), ein Verdichter (16), ein Wärmeaustauscher (18), ein Druckminderventil (20) und zumindest ein Schlauch (24, 26) für das Fließen eines Kältemittels oder superkritischen Mittels, um einen Wärmeaustauschkreislauf zu bilden, und ein Messmittel (40) für eine Größe, die für das besagte Kältemittel oder superkritische Mittel charakteristisch ist und die aufgrund seines Drucks, seiner Fließgeschwindigkeit und seiner Temperatur gewählt wird, **dadurch gekennzeichnet, dass** zumindest eine der besagten Vorrichtungen mindestens ein entsprechend der besagten Vorrichtung längliches Sackloch (30) umfasst, das nach außen hin zur besagten Vorrichtung offen ist, wobei das besagte Loch in das Innere der Vorrichtung eintaucht, um mit dem Kältemittel oder superkritischen Mittel in Kontakt zu sein, wobei das besagte Loch (30) einen Grundbestandteil der Vorrichtung bildet und das besagte Messmittel (40) aufnimmt.

2. Klimakreislauf nach Anspruch 1, wobei zumindest ein besagtes Sackloch (30) bei der Herstellung der Vorrichtung (12, 14, 16, 18, 20, 24, 26) ausgeführt wird, um eine einheitliche Gesamtheit mit dieser zu bilden.

3. Klimakreislauf nach Anspruch 1 oder 2, wobei zumindest ein besagtes Sackloch (30) in des Innere der Vorrichtung (12, 14, 16, 18, 20, 24, 26) über eine derartiges Länge eindringt, dass die Wärmeaustauschfläche zwischen dem Sackloch (30) und dem im Inneren der besagten Vorrichtung (12, 14, 16, 18, 20, 24, 26) fließenden Wärmeträger maximal ist.

4. Klimakreislauf nach einem der vorhergehenden Ansprüche, wobei das Messmittel (40) von einer Wärme leitenden Paste (35) umgeben wird.

5. Klimakreislauf nach einem der vorhergehenden Ansprüche, wobei zumindest ein besagtes Sackloch (30) eine im Wesentlichen zylindrische Handschuhfingerform aufweist.

6. Klimakreislauf nach einem der vorhergehenden Ansprüche, wobei ein zweites Sackloch (30) in der Vorrichtung angeordnet ist und ein zweites Messmittel (40') einschließt, welches als Referenzfühler dient.

7. Klimakreislauf nach Anspruch 6, wobei der zweite Fühler (40') mit einer Energiequelle verbunden ist, die eine festgelegte Energiemenge abgibt und zwar so, dass für die besagte Energiemenge der Temperaturunterschied zwischen der mithilfe des ersten Fühlers (40) gemessenen Temperatur und der vom zweiten Fühler (40') gemessenen Referenztemperatur für den Mitteldurchsatz bezeichnend ist.

8. Klimakreislauf nach einem der vorhergehenden Ansprüche, wobei das Messmittel (40, 40') ein Thermoelement ist.

9. Klimakreislauf nach einem der Ansprüche 1 bis 7, wobei das Messmittel (40, 40') ein Fühler mit negativem Temperaturkoeffizienten ist.

ECHANGEUR

18

10

EVAPORATEUR

12

16

20

24

26

14  CONDENSEUR

## FIG.1

40

12

35

30

## FIG.2

40

40'

12

30

30

35

35

## FIG.3

7

FIG.4

FIG.5

**EP 1 426 214 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 63170121 B